# EUROPÄISCHE PATENTSCHRIFT

(11) **EP 3 637 291 B1**
(45) Veröffentlichungstag und Bekanntmachung des Hinweises auf die Patenterteilung: **27.04.2022**
(21) Anmeldenummer: 19199155.3
(22) Anmeldetag: 24.09.2019
(51) Int. Cl.: G06F 21/34, G06F 21/31

(54) **ZUGRIFFSSTEUERUNGSSYSTEM FÜR RECHNER**
COMPUTER ACCESS CONTROL SYSTEM
SYSTÈME DE COMMANDE D'ACCÈS POUR ORDINATEUR

(30) Priorität: 24.09.2018 DE 102018007497
(43) Veröffentlichungstag der Anmeldung: 15.04.2020
(73) Patentinhaber: Astra Gesellschaft Für Asset Management MbH&Co. Kg, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- WO-A1-2017/083551
- US-A- 5 877 483
- US-A1- 2006 095 389
- US-A1- 2013 237 190
- US-A1- 2014 047 510
- US-A1- 2016 337 863

## Beschreibung

Die Erfindung betrifft ein Zugriffssteuerungssystem für Rechner nach dem Oberbegriff des Anspruchs 1.

Zum Schutz vor Datendiebstahl gibt es Zugriffssteuerungssysteme für Rechner, die erst nach Prüfung einer Berechtigung anhand einer Benutzer-ID und einer PIN einen Rechner entsperren und so den Zugriff gestatten. Sicherheitsvorschriften in Unternehmen und Behörden können vorsehen, dass ein Benutzer dazu einen elektronischen Ausweis mitführen muss, der von einem Lesegerät gelesen werden kann. Um Missbrauch zu verhindern, muss der Benutzer bei Verlassen des Rechners diesen sperren und bei erneutem Benutzungswunsch die Prüfung einer Berechtigung wiederholen. Dies kann gerade bei häufigem Wechsel umständlich sein.

Aus der US 2013/0237190 A1 ist ein Verfahren und eine Vorrichtung zur Benutzer-Authentifizierung bekannt. Anstelle eines Kartenlesers und eines elektronischen Ausweises wird ein Smartphone verwendet, bei dem Kartenleser und Ausweis durch Software emuliert ist. Ein Computer, an dem sich ein Benutzer als berechtigt ausweisen muss, ist mit dem Smartphone über eine Bluetooth-Schnittstelle gekoppelt. Die Eingabe von Benutzerdaten zum Aufbau einer stabilen Bluetooth-Verbindung kann entweder manuell oder durch eine NFC-Schnittstelle erfolgen. Im Falle des Aufbaus einer stabilen Bluetooth-Verbindung wird eine Feldstärke-Überwachung durchgeführt, aufgrund der ein gültiger Abstandsbereich abgeschätzt wird.

Ferner ist aus der US 2016/0337863 A1 eine Sicherheitseinrichtung bekannt, die eine Abstandsmessung zwischen einem von einem Nutzer mitgeführten Schlüssel und einem Netzwerk nutzt. Als gültiger Abstand wird ein Abstand zwischen 0,5 m und 2 m angegeben.

Der Erfindung liegt die Aufgabe zugrunde, bei einem Zugriffssteuerungssystem für Rechner die Benutzung ohne Einbuße an Sicherheit zu vereinfachen.

Diese Aufgabe wird bei einem Zugriffssteuerungssystem nach dem Oberbegriff des Anspruchs 1 durch die Merkmale dieses Anspruchs gelöst.

Weiterbildungen und vorteilhafte Ausgestaltungen ergeben sich aus den Unteransprüchen.

Bei der erfindungsgemäßen Lösung wird die Bedienung und die Sicherheit dadurch verbessert, dass der Benutzer einen elektronischen Anwesenheits-Tag mit einer Benutzer-ID bei sich führt, der zuerst eine Weckfunktion und anschließend eine Ortsinformation des Lesegeräts empfängt und die Ortsinformationen zusammen mit der Benutzer-ID zum Lesegerät zurück überträgt, sobald er sich im Lesefeld des Lesegeräts aufhält. Bei Eintritt in das Feld erfolgt durch Rückmeldung der Ortsinformation des Lesegeräts und Senden der Benutzer-ID ein Entsperren des Rechners, während bei Verlassen des Feldes der Rechner automatisch wieder gesperrt wird. Der Benutzer ist somit davon entbunden, sich bei Verlassen des Rechners abzumelden und bei Wiederbenutzung anzumelden.

Die Erfindung nutzt Datenübertragungen sowohl im UHF-Bereich, nämlich 868 MHz, als auch eine im LF-Bereich, nämlich 125 kHz. Im UHF Bereich lassen sich hohe Datenraten erzielen, so dass die Verarbeitung umfangreicher Datenmengen sehr schnell erfolgen kann. Außerdem ist eine hohe Reichweite über mehrere Meter möglich. Allerdings lässt sich die genaue Reichweite der kommunizierenden UHF-Transceiver nur sehr schwer vorhersagen, da die Ausbreitung durch Personen oder Gegenstände in der Nähe verändert werden kann. Eine zuverlässige Selektion unterschiedlicher Paarungen von elektronischen Anwesenheits-Tags und Lesegeräten allein über die Reichweite ist daher nicht möglich.

Im LF Bereich hingegen wird die Ausbreitung der elektromagnetischen Wellen nur sehr wenig von Gegenständen beeinträchtigt und wenn, auch nur von großen ferromagnetischen Massen. Die Ausbreitung des Feldes ist daher weitgehend konstant und es lässt sich mit hoher Genauigkeit bestimmen, innerhalb welchen Radius der LF-Empfänger das Sendesignal empfangen und auswerten kann. Da im LF Bereich allerdings nur geringe Datenraten möglich sind, würde ein Autorisierungsdialog lange dauern. Daher wird das LF-Signal nur dazu verwendet, nach Empfang der Weckinformation den UHF-Transceiver im elektronischen Anwesenheits-Tag zu wecken und die vom LF-Empfänger empfangene Ortsinformation des LF-Senders zu übermitteln, die beim Dialog der UHF-Transceiver rückübermittelt wird. Die UHF-Transceiver der elektronischen Anwesenheits-Tags werden somit nur für den Autorisierungsdialog eingeschaltet, der allerdings viel Energie benötigt, und bleiben in der übrigen Zeit im Ruhezustand, in der nur sehr wenig Energie benötigt wird. Durch die Auswertung der Weckinformation zu Beginn einer LF-Aussendung wird außerdem sichergestellt, dass der UHF-Transceiver des elektronischen Anwesenheits-Tags nur bei Empfang eines Signals vom LF-Sender des Lesegeräts eingeschaltet wird, während er auf Störsignale anderer Quellen nicht aktiviert wird.

Die Sendeleistung des LF-Senders in Verbindung mit dessen Antennengewinn und die Eingangsempfindlichkeit des LF-Empfängers in Verbindung mit dessen Antennengewinn ist so bemessen sein, dass die Reichweite der LF-Übertragungsstrecke zwischen 80 cm und 2,5 m beträgt.

Es ist bei dieser Reichweite zu erwarten, dass eine Erfassung auch dann stattfinden kann, wenn der elektronische Anwesenheits-Tag sich gerade an der dem Lesegerät abgewandten Seite des Körpers des Benutzers befindet. Weiterhin wird verhindert, dass die LF-Empfänger zu oft Signale benachbarter Lesegeräte empfängt und unnötig seinen UHF-Transceiver aktiviert.

Das vom LF-Sender erzeugte elektromagnetische Feld weist eine Kugelcharakteristik auf und die Antennenanordnung des LF Empfängers weist ebenfalls eine Kugelcharakteristik auf.

Es lässt sich dann einfach ein Radius um den Ort der Erfassungsvorrichtung angeben innerhalb dessen der Eintritt eines elektronischen Anwesenheits-Tags erkannt und ausgewertet wird. Dies vereinfacht die Bemessung und Justierung der Erfassungsbereiche benachbarter Lesegeräte, so dass diese eindeutig sind und sich nicht überlappen oder stören.

Die bekannte NFC-Technologie, die einen Frequenzbereich um 13 MHz nutzt, ist anstelle der LF-Übertragungsstrecke nicht geeignet, da sie nur für sehr geringe Reichweiten von 1 bis 4 cm zum Lesen von direkt vor das Lesegerät gehaltenen Datenkarten geeignet ist. Außerdem ist das Feld gerichtet, damit keine in der Nähe befindliche Datenkarten stören.

Der LF-Empfänger im elektronischen Anwesenheits-Tag ist zwar dauerhaft aktiv, verbraucht aber wenig Energie. Daher lässt sich der elektronische Ausweis über lange Zeit mit Energie aus einer Batterie versorgen und erfordert nur eine geringe Baugröße, die es ermöglicht, den elektronischen Ausweis in der Kleidung oder am Körper zu tragen.

Gemäß einer Weiterbildung kann die Reichweite durch Variation der Sendeleistung in Grenzen einstellbar sein.

Dadurch ist es möglich, die Funktion und damit auch den Energieverbrauch an die örtlichen Gegebenheiten und an Gewohnheiten der Benutzer anzupassen.

Eine Weiterbildung sieht vor, dass eine Benutzer-ID auf einem gesonderten elektronischen Ausweis oder auf dem elektronischen Anwesenheits-Tag gespeichert ist und mittels der Steuervorrichtung von dort zumindest einmalig bei einem ersten Anwesenheitsdialog ebenfalls zum Lesegerät übertragen wird und dass eine Autorisierungsprüfung der Benutzer-ID und der PIN vom Rechner über eine USB-Schnittstelle oder von einem Server oder einem Cloud-Server über eine LAN- oder WLAN-Schnittstelle vorgenommen wird.

Bei der Speicherung der Benutzer-ID auf einem vorhandenen elektronischen Ausweis können diese weiterverwendet werden, um zum Beispiel Zeiterfassung- oder Zutrittskontrollsysteme zu benutzen. Beim elektronischen Anwesenheits-Tag beschränkt sich der Dialog mit dem Lesegerät dann auf die Rücksendung der empfangenen Ortsinformation in Verbindung mit einer oder der ebenfalls auf dem Anwesenheits-Tag gespeicherten Benutzer-ID. Im anderen Fall wird auch die Benutzer-ID und die PIN auf dem Anwesenheits-Tag gespeichert, so dass der Benutzer dann nur noch einen Ausweis mitführen muss.

Auch der elektronische Anwesenheits-Tag kann neben dem Freischalten eines Rechners im Bereich der Zutrittskontrolle eingesetzt werden, um eine Tür, in deren Nähe sich der Träger eines elektronischen Anwesenheits-Tags befindet, automatisch öffnen zu können.

Das Lesegerät ermöglicht es, die Autorisierungsprüfung der Benutzer-ID in Verbindung mit einer PIN und/oder einem elektronischen Zertifikat sowohl vom Rechner über eine USB-Schnittstelle als auch von einem Server oder einem Cloud-Server über eine LAN- oder WLAN-Schnittstelle vorzunehmen. Damit ist eine Autorisierungsprüfung auch möglich, wenn der Rechner nur als Eingabegerät mit stark eingeschränkten Fähigkeiten arbeitet, dafür aber eine Netzwerkverbindung zu einem Server besteht, der diese Autorisierungsprüfung übernehmen kann.

Weiter kann vorgesehen sein, dass eine PIN und/oder ein spezielles elektronisches Zertifikat auf einem gesonderten elektronischen Ausweis oder auf dem elektronischen Anwesenheit-Tag gespeichert ist und von dort zumindest einmalig nach Übertragung einer Benutzer-ID bei einem ersten Anwesenheitsdialog ebenfalls zum Lesegerät übertragen wird, indem die PIN und/oder das spezielle elektronische Zertifikat automatisch aus dem Speicher gelesen oder auf Aufforderung vom Benutzer die PIN durch Drücken einer Taste auf dem Anwesenheit-Tag übertragen wird.

Auch bei der Speicherung der PIN und/oder des elektronischen Zertifikats auf dem elektronischen Ausweis können vorhandene Ausweise weiter genutzt werden. Bei Speicherung auf dem elektronischen Anwesenheits-Tag besteht die Möglichkeit, die PIN und/oder das elektronische Zertifikat automatisch zu lesen und zu übertragen oder als vereinfachte Bedienung die Übertragung der PIN durch einen einzigen Tastendruck auszulösen und so auf eine umständliche Eingabe mehrerer Ziffern zu verzichten.

Vorzugsweise verfügen die Transceiver über eine Kollisionsauflösungsroutine.

Dadurch ist es möglich, Zugriffsbegehren oder die Aufrechterhaltung der Entsperrung von Rechnern auch dann sicherzustellen, wenn sich eine Mehrzahl von Personen mit elektronischen Ausweisen oder Anwesenheits-Tags gerade im selben Lesefeld aufhalten und Autorisierungsdialoge gleichzeitig angestoßen werden. In dem Fall bleibt derjenige berechtigt, der zuerst autorisiert wurde.

Wenn zwischen dem Lesegerät und dem Rechner über eine systemeigene Software des Betriebssystems ein verschlüsselter Autorisierungsdialog stattfindet, wie es das CCID-Kommunikationsprotokoll beim Windows-Login vorsieht, bei dem eine Kennung häufiger übertragen werden muss als der elektronische Ausweis oder der elektronische Anwesenheits-Tag gelesen wird, kann mittels der Steuerung des Lesegerätes die Benutzer-ID, die PIN, dass elektronische Zertifikat und/oder die Ortsinformation bis zum nächsten Lesevorgang des elektronischen Ausweises und/oder des elektronischen Anwesenheits-Tags in einem Speicher des Lesegerät zwischengespeichert werden und die Kennung aus der zwischen gespeicherten Benutzer-ID, PIN, dem Zertifikat und/oder der Ortsinformation generiert werden.

Damit Windows ein Log-in ohne zusätzliche Software zulässt, muss sich das Lesegerät als CCID-USB-Gerät identifizieren und das CCID- Kommunikationsprotokoll einhalten. Dabei findet allerdings ein verschlüsselter Autorisierungsdialog statt, bei dem alle 10 ms eine Kennung abgefragt wird. Die erneute Abfrage von Benutzer-ID, PIN, elektronischen Zertifikat und/oder Ortsinformation ist innerhalb dieser Zeitspanne jedoch nicht möglich. Daher ist vorgesehen, dass die Angaben zur Generierung der Kennung zwischengespeichert werden und somit dauerhaft auch in den Lesepausen zur Verfügung stehen. Erst bei Entfernung des elektronischen Ausweises oder des Anwesenheits-Tags wird der Speicher gelöscht.

Es kann vorgesehen sein, dass nach einer Reihe fehlerfreien Lesens des elektronischen Ausweises und/oder des elektronischen Anwesenheits-Tags und einem folgenden fehlerhaften Lesen anschließend zunächst ein Warnsignal generiert und nach Ablauf einer einstellbaren Wartezeit der Rechner gesperrt wird.

Der Rechner wird in diesem Fall nicht sofort gesperrt, sondern der Benutzer hat noch die Möglichkeit, den elektronischen Ausweis oder den Anwesenheits-Tag wieder in das Lesefeld des Lesegeräts zu bringen, falls er vorher unbeabsichtigt verrutscht ist oder entfernt wurde.

Weiterhin kann der elektronische Ausweis und/oder der elektronische Anwesenheits-Tag vom Lesegerät mit Daten beschreibbar und/oder aus lesbar sein.

Dadurch können mit demselben Lesegerät auf einfache Weise persönliche Berechtigungen, Ortsberechtigungen, Zeitzonen, Zeitstempel, also die zeitliche Länge der Gültigkeit aller Rechte, schwarze Listen oder Ereignisse auf dem elektronischen Ausweis oder dem elektronischen Anwesenheits-Tag gespeichert oder zwischengespeichert werden. Dies geschieht in der Zeit, an der am Rechner gearbeitet wird und der elektronische Ausweis oder der elektronische Anwesenheits-Tag sich im Wirkbereich des Lesegerätes befindet.

Es ist auch möglich, das Lesegerät über die USB-Schnittstelle oder über die WLAN- oder LAN-Schnittstelle upzudaten oder Software in einen Rechner zu laden.

Dadurch kann z. B. eine Software für die interne Steuerung des Lesegeräts eingespielt werden, ohne das Lesegerät entfernen zu müssen. Es ist ebenfalls vorgesehen, die stationäre Software für den Rechner im Speicher des Lesegeräts vorzuhalten, so dass bei Anschluss an einen Rechner diese zunächst über den USB-Anschluss geladen werden kann.

Nachfolgend wird die Erfindung anhand eines Ausführungsbeispiels erläutert, das in der Zeichnung dargestellt und anschließend beschrieben ist.
- Fig. 1: zeigt ein Blockschaltbild eines Zugriffssteuerungssystem nach der Erfindung,
- Fig. 2: zeigt ein Blockschaltbild eines Lesegerätes,
- Fig. 3: zeigt ein Blockschaltbild eines elektronischen Ausweises,
- Fig. 4: zeigt ein Blockschaltbild eines Anwesenheits-Tags,
- Fig. 5: zeigt eine Anordnung von Rechner-Arbeitsplätzen
- Fig.6: zeigt ein Flussdiagramm des Lesens eines elektronischen Ausweises,
- Fig. 7: zeigt ein Flussdiagramm des Lesens eines Anwesenheits-Tags und
- Fig. 8: zeigt ein Flussdiagramm eines kombinierten Lesens eines elektronischen Ausweises und eines Anwesenheits-Tags.

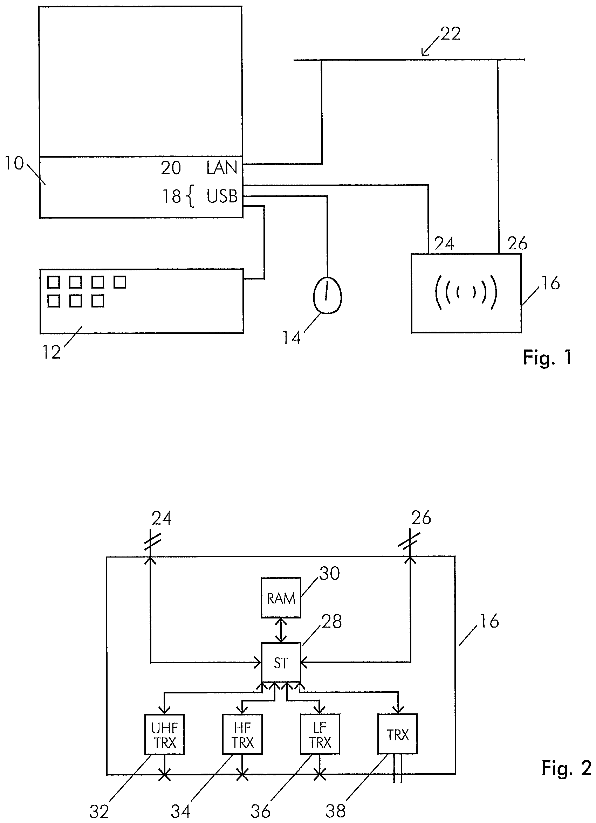

Fig. 1 zeigt ein Blockschaltbild eines Zugriffssteuerungssystems nach der Erfindung. Ein Rechner 10 verfügt über eine Reihe von USB-Anschlüssen 18 und einen LAN-Anschluss 20. An die USB-Anschlüsse 18 sind Eingabegeräte angeschlossen, nämlich eine Tastatur 12, eine Maus 14 und ein Lesegerät 16. Über den LAN-Anschluss 20 ist der Rechner außerdem über ein Netzwerk 22 mit einem hier nicht dargestellten Server verbunden. Auch das Lesegerät 16 verfügt über einen LAN-Anschluss 26 und ist ebenfalls mit dem Netzwerk 22 verbunden.

Fig. 2 zeigt ein Blockschaltbild des in Fig. 1 dargestellten Lesegeräts 16. Das Lesegerät 16 verfügt über eine Steuerung 28, die zum Beispiel aus einem Prozessor bestehen kann und mittels einer Software gesteuert wird. Zur Datenspeicherung ist die Steuerung 28 mit einem Speicher 30 verbunden. Über eine USB-Schnittstelle 24 und eine LAN-Schnittstelle 22 kann das Lesegerät 16 mittels der Steuerung mit einem Rechner 10 oder einem Server über ein Netzwerk kommunizieren.

Ferner werden von der Steuerung 28 Transceiver gesteuert, über die ein Datenaustausch mit elektronischen Ausweisen oder elektronischen Anwesenheits-Tags stattfinden kann. Es handelt sich hierbei um einen UHF-Transceiver 32 für den Frequenzbereich 868 MHz, einen HF-Transceiver 34 für den Frequenzbereich 13,56 MHz, einen LF-Transceiver 36 für den Frequenzbereich 125 kHz und einen Transceiver für das Lesen von Ausweisen über galvanische Kontakte.

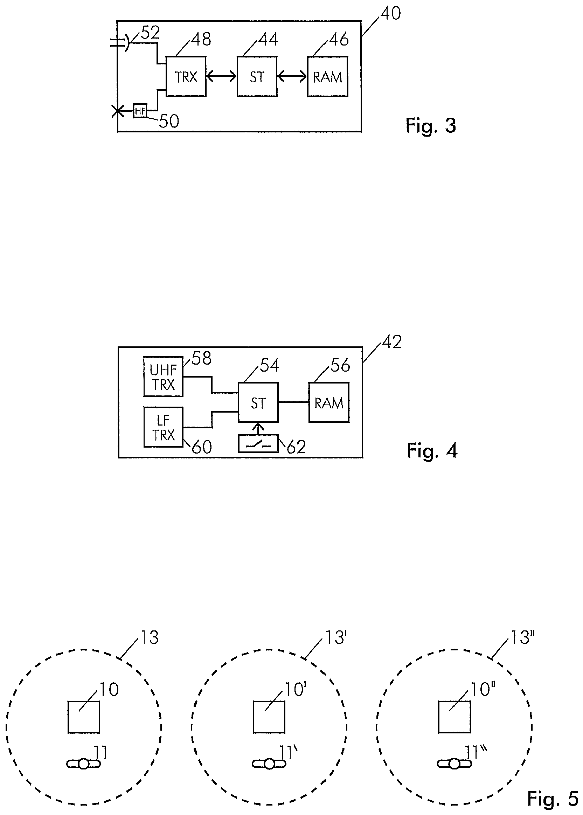

Fig. 3 zeigt ein Blockschaltbild eines elektronischen Ausweises 40. Dieser umfasst eine Steuerung 44, einen Speicher 46 und einen Transceiver 48. Der Transceiver 48 kann sowohl über galvanische Kontakte 52 als auch über ein drahtloses elektromagnetisches Feld mittels eines Sendeempfängers 50 mit dem Lesegerät 16 kommunizieren. Als Frequenzbereiche können im Prinzip der UHF, der HF und der LF-Bereich benutzt werden.

Der elektronische Ausweis 40 ist geeignet, eine Benutzer-ID und optional auch eine PIN und/oder ein spezielles elektronisches Zertifikat im Speicher 46 zwischenzuspeichern und in Verbindung mit dem Lesegerät 16 mittels der Steuerung 44, dem Transceiver 48 und wahlweise der Schnittstelle 52 oder 50 aus dem Speicher 46 zum entsprechenden Transceiver des Lesegerätes 16 zu übertragen.

Fig. 4 zeigt ein Blockschaltbild eines elektronischen Anwesenheits-Tags 42. Dieser umfasst eine Steuerung 54, einen Speicher 56, einen UHF-Transceiver 58, einen LF-Transceiver 60 und eine Tastatur 62.

Im einfachsten Fall empfängt der elektronische Anwesenheits-Tag 42 einer Ortsinformation vom Lesegerät 16 im LF-Bereich und gibt diese Ortsinformation in Verbindung mit einer Benutzer-ID im UHF-Bereich an das Lesegerät 16 zurück.

Dazu sendet das Lesegerät 16 über seinen LF-Transceiver 36, der auch als einfacher Sender ausgebildet sein kann, wiederholt eine Ortsinformation. Nähert sich ein Benutzer mit einem Anwesenheits- Tag 42 dem Lesegerät 16 und erreicht deren Lesefeld, dann empfängt der Transceiver 60 des elektronischen Anwesenheits-Tags 42, der auch als einfacher Empfänger ausgebildet sein kann, die Ortsinformation. Die Steuerung 54 speichert die Ortsinformation und die Benutzer-ID im Speicher 56 und versetzt den UHF-Transceiver 58 in einen Betriebszustand, der die im Speicher 56 gespeicherte Ortsinformation und die ebenfalls gespeicherte Benutzer-ID an den UHF-Transceiver 32 weiterleitet. Stimmt die vom Lesegerät 16 gesendete Ortsinformation mit der empfangenen Ortsinformation überein und ist die Benutzer-ID im Lesegerät als berechtigter Nutzer gespeichert, wird dies als Anwesenheit gewertet und der Rechner entsperrt. Das Lesen und Rückübermitteln der Ortsinformation und der Benutzer-ID wird wiederholt durchgeführt und der Rechner bleibt solange entsperrt, bis bei einem neuen Sende- und Lesevorgang keine oder eine nicht übereinstimmende Ortsinformation und Benutzer-ID ermittelt wird. Dann wird der Rechner gesperrt.

Durch die Aufteilung in eine LF-Funkstrecke im Frequenzbereich 125 kHz und in eine UHF-Funkstrecke im Frequenzbereich von 868 MHz erfolgt das Aktivieren des elektronischen Anwesenheits-Tags, also das Einschalten dessen UHF-Transceivers 58 nur in einem Radius zwischen 40 cm und 2 m um das Lesegerät 16. Im LF-Bereich wird nämlich die Ausbreitung durch Gegenstände im Lesefeld nur wenig verändert, so dass die Geometrie des Lesefeldes sehr genau festgelegt werden kann. Die Antennen der LF-Sender des Lesegerätes haben Kugelcharakteristik und können so justiert werden, dass sich keine Überlappungen mit benachbarten Lesegeräten ergeben. Auch die Antennen der LF Empfänger der elektronischen Anwesenheits- Tags haben Kugelcharakteristik und empfangen das Lesefeld mit gleicher Feldstärke unabhängig von ihrer Ausrichtung im Raum. Aufgrund der bei der niedrigen Frequenz ebenfalls niedrigen Datenrate findet nur eine Übermittlung der Ortsinformation statt.

Die UHF-Funkstrecke ermöglicht hingegen eine höhere Datenrate, und eignet sich somit für einen Dialog, bei dem auch umfangreichere Daten übermittelt werden können, wie zum Beispiel die Benutzer-ID und die PIN in verschlüsselter Form.

Auch wird eine höhere Reichweite erzielt, die allerdings aufgrund von Reflexionen und Dämpfungen stark variieren kann. Die UHF-Transceiver benötigen mehr Energie als ein LF Empfänger, der ständig in Betrieb sein kann.

Fig. 5 zeigt eine Anordnung von drei Rechnerarbeitsplätzen mit Rechnern 10, 10'und 10". Die Lesefelder der Lesegeräte haben jeweils einen Radius 13, 13' und 13". Die Radien der Leserfelder sind also so bemessen, dass sie sich nicht überlappen aber sich ein vor den Rechnern sitzender Benutzer 11, 11' und 11" im zugeordneten Lesefeld befindet.

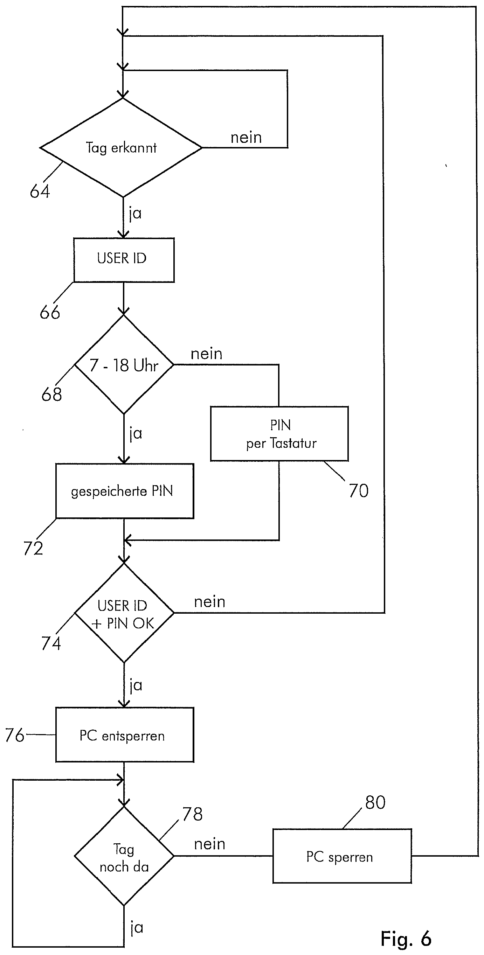

Fig. 6 zeigt ein Flussdiagramm des Lesens eines elektronischen Ausweises. Wird bei der Entscheidung 64 ein Ausweis erkannt, wird anschließend bei 66 einer Benutzer-ID übertragen. Bei der Entscheidung 68 wird abgefragt, ob die aktuelle Zeit innerhalb der üblichen Arbeitszeit oder außerhalb der üblichen Arbeitszeit liegt. Innerhalb der üblichen Arbeitszeit wird dann bei 72 eine gespeicherte PIN übertragen, außerhalb der üblichen Arbeitszeit muss die PIN bei 70 per Tastatur eingegeben werden.

Bei 74 werden Benutzer-ID und PIN auf Paarung und Gültigkeit überprüft. Bei positiver Prüfung wird bei 76 der Rechner entsperrt. Anschließend wird in einer Schleife das Vorhandensein des elektronischen Ausweises permanent bei Entscheidung 78 überprüft. Wird kein elektronischer Ausweis mehr erkannt, wird bei 80 der Rechner gesperrt.

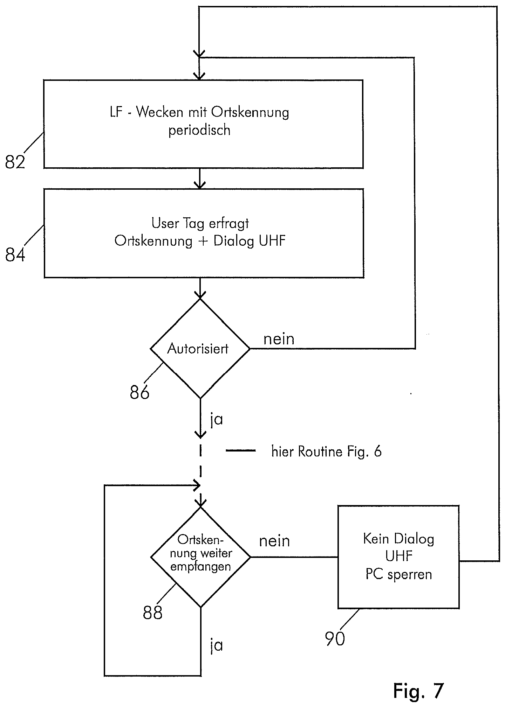

Fig. 7 zeigt ein Flussdiagramm des Lesens eines Anwesenheits-Tags. In Schritt 82 wird vom Lesegerät im LF-Frequenzbereich periodisch ein Wecksignal mit Ortsinformation gesendet. Wird dieses Signal von einem elektronischen Anwesenheits- Tag empfangen wird die Ortsinformation im UHF-Frequenzbereich zurückgesendet. Es erfolgt anschließend eine Prüfung, ob die gesendete mit der empfangenen Ortsinformation übereinstimmt und somit ein Benutzer autorisiert ist.

Wenn bei der Entscheidung 86 ein Benutzer autorisiert ist, kann sich eine Routine anschließen, wie sie in Fig. 6 beschrieben ist, und bei der einer Benutzer-ID und PIN abgefragt und überprüft werden.

Gemäß Fig. 7 wird anschließend weiterhin überprüft, ob sich der elektronische Anwesenheits- Tag noch im Lesefeld befindet oder entfernt ist. Dies geschieht über die Entscheidung 88. Bei "ja" wird eine Schleife durchlaufen und die Prüfung wiederholt. Bei "nein" wird der Rechner gesperrt.

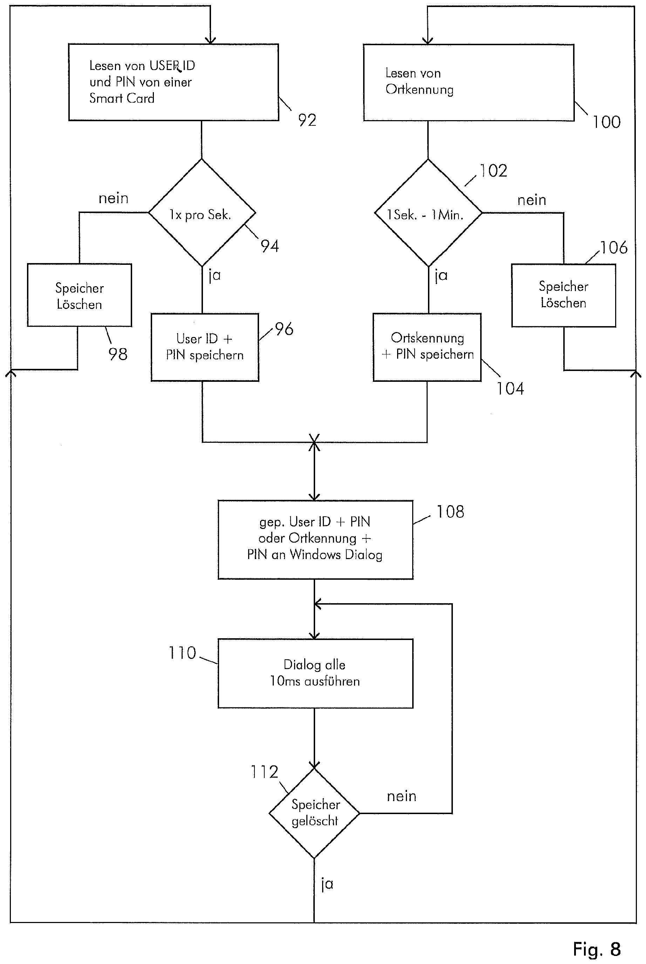

Fig. 8 zeigt ein Flussdiagramm eines kombinierten Lesens eines elektronischen Ausweises und eines Anwesenheits-Tags. Bei 92 wird eine Benutzer-ID und eine PIN von einem elektronischen Ausweis in Form einer Smart-Card gelesen. Die Übertragung erfolgt dabei im HF-Bereich. Das Lesen erfolgt einmal pro Sekunde. Ist das Lesen bei 94 erfolgreich, werden die Benutzer-ID und die PIN bei 96 in einem Zwischenspeicher des Lesegerätes gespeichert. Anderenfalls wird bei 98 der Speicher gelöscht.

Parallel dazu wird auch bei 100 einer Ortsinformation gelesen. Dies kann einmal pro Sekunde aber auch zur Schonung einer Batterie des Anwesenheits-Tags in größeren Zeitabständen zum Beispiel einmal pro Minute erfolgen. Ist das Lesen bei 102 erfolgreich, werden die Ortsinformation und gegebenenfalls eine PIN, wenn diese nicht auf dem elektronischen Ausweis vorhanden ist, bei 104 gespeichert. Bei nicht erfolgreichem Lesen wird bei 106 der Speicher gelöscht.

Im Folgenden wird davon ausgegangen, dass unter Windows ein Log-in ohne zusätzliche Software stattfindet und das CCID- Kommunikationsprotokoll abläuft, bei dem alle 10 ms eine Kennung abgerufen werden. Anstelle dieser Kennung werden bei 108 die zwischen gespeicherten Informationen verwendet und bei 110 an den Dialog übergeben. Ist bei der Entscheidung in 112 der Speicher nicht gelöscht, kann das CCID-Kommunikationsprotokoll unverändert weiterlaufen. Ist der Speieher gelöscht, wird der Rechner automatisch gesperrt und im Flussdiagramm an den Anfang gesprungen.

**Bezugszeichenliste**

| | | | |
|---|---|---|---|
| 10 | Rechner | 50 | HF-Schnittstelle |
| 12 | Tastatur | 52 | Kontakt-Schnittstelle |
| 14 | Maus | 54 | Steuerung |
| 16 | Lesegerät | 56 | Speicher |
| 18 | USB-Anschlüsse | 58 | UHF-Transceiver |
| 20 | LAN-Anschluss | 60 | LF-Transceiver |
| 22 | Netzwerk | 62 | Taste |
| 24 | USB-Schnittstelle | 10, 10', 10" | Rechner |
| 26 | LAN-Schnittstelle | 11, 11', 11" | Benutzer |
| 28 | Steuerung | 13, 13', 13" | Radius Lesefeld |
| 30 | Speicher | 64 - 112 | Schritte Flussdiagramm |
| 32 | UHF-Transceiver | | |
| 34 | HF-Transceiver | | |
| 36 | LF-Transceiver | | |
| 38 | Transceiver | | |
| 40 | elektronischer Ausweis | | |
| 42 | elektron. Anwesenheits- Tag | | |
| 44 | Steuerung | | |
| 46 | Speicher | | |
| 48 | Transceiver | | |

## Patentansprüche

1. Zugriffssteuerungssystem für Rechner (10), bestehend aus einer Benutzereingabevorrichtung, wie Tastatur (12) und Maus (14), sowie einem Lesegerät und einem vom Lesegerät lesbaren elektronischen Ausweis (40) mit einer Benutzer-ID, wobei nach Lesen der Benutzer-ID und Eingabe einer PIN nach Prüfung von Benutzer ID und PIN bei Autorisierung eine Entsperrung des Rechners (10) erfolgt, **dadurch gekennzeichnet, dass** ein vom Benutzer getragener elektronischer Anwesenheits-Tag (42) einen UHF-Transceiver (58), einen LF-Empfänger (60) und eine Steuerung (54) enthält und das Lesegerät (16) einen UHF-Transceiver (32), einen LF-Sender (36) und eine Steuerung (28) enthält, dass der LF-Sender (36) wiederholt eine Weckinformation gefolgt von einer eigenen Ortsinformation und einer Benutzer-ID sendet und bei Empfang der Weckinformation durch einen LF-Empfänger (60) des elektronischen Anwesenheits-Tags (42) dessen UHF-Transceiver (58) von einem Ruhezustand in einen Betriebszustand versetzt wird und mit dem UHF-Transceiver (32) des Lesegerätes (16) einen Anwesenheitsdialog mit Rückübertragung der außerdem vom LF-Empfänger (60) erhaltenen Ortsinformation und Benutzer-ID durchführt, dass der Anwesenheitsdialog in Zeitabständen wiederholt wird und bei erfolgreicher Prüfung der Anwesenheit des Benutzers eine Entsperrung des Rechners (10) bis zur nächsten Prüfung der Anwesenheit erfolgt oder aufrechterhalten wird, wobei die Sendeleistung des LF-Senders (36) in Verbindung mit dessen Antennengewinn und die Eingangsempfindlichkeit des LF-Empfängers (60) in Verbindung mit dessen Antennengewinn so bemessen sind, dass die Reichweite der LF-Übertragungsstrecke zwischen 80 cm und 2,5 m beträgt, dass das vom LF-Sender (36) erzeugte elektromagnetische Feld eine Kugelcharakteristik aufweist und dass die Antennenanordnung des LF Empfängers (60) ebenfalls eine Kugelcharakteristik aufweist.

2. Zugriffssteuerungssystem nach Anspruch 1, **dadurch gekennzeichnet, dass** die Reichweite durch Variation der Sendeleistung in Grenzen einstellbar ist.

3. Zugriffssteuerungssystem nach Anspruch 1 oder 2, **dadurch gekennzeichnet, dass** eine Benutzer-ID und/oder ein elektronisches Zertifikat auf einem gesonderten elektronischen Ausweis (40) oder auf dem elektronischen Anwesenheits-Tag (42) gespeichert ist und mittels der Steuervorrichtung (44, 54) von dort zumindest einmalig bei einem ersten Anwesenheitsdialog ebenfalls zum Lesegerät (16) übertragen wird und dass eine Autorisierungsprüfung der Benutzer-ID und der PIN und/oder des elektronischen Zertifikat vom Rechner (10) über eine USB-Schnittstelle (18) oder von einem Server oder einem Cloud-Server über eine LAN- oder WLAN-Schnittstelle (20) vorgenommen wird.

4. Zugriffssteuerungssystem nach einem der Ansprüche 1 bis 3, **dadurch gekennzeichnet, dass** eine PIN und/oder ein elektronisches Zertifikat auf einem gesonderten elektronischen Ausweis (40) oder auf dem elektronischen Anwesenheit-Tag (42) gespeichert ist und von dort zumindest einmalig nach Übertragung einer Benutzer-ID einmalig bei einem ersten Anwesenheitsdialog ebenfalls zum Lesegerät (16) übertragen wird, indem die PIN und/oder ein elektronisches Zertifikat automatisch aus dem Speicher (46, 56) gelesen oder die PIN auf Aufforderung vom Benutzer durch Drücken einer Taste (62) auf dem Anwesenheit-Tag (42) übertragen wird.

5. Zugriffssteuerungssystem nach einem der Ansprüche 1 bis 4, **dadurch gekennzeichnet, dass** die UHF-Transceiver (32) mittels ihrer Steuerung über eine Kollisionsauflösungsroutine verfügen.

6. Zugriffssteuerungssystem nach einem der Ansprüche 1 bis 5, **dadurch gekennzeichnet, dass** zwischen dem Lesegerät (16) und dem Rechner (10) über eine systemeigene Software des Betriebssystems ein verschlüsselter Autorisierungsdialog stattfindet, wie es das CCID-Kommunikationsprotokoll beim Windows-Login vorsieht, bei dem eine Kennung häufiger übertragen werden muss als der elektronische Ausweis (40) oder der elektronische Anwesenheits-Tag (42) gelesen wird, dass mittels der Steuerung (28) des Lesegerätes (16) die Benutzer-ID, der PIN das elektronische Zertifikat und/oder die Ortsinformation bis zum nächsten Lesevorgang des elektronischen Ausweises (40) und oder des elektronischen Anwesenheit-Tags (42) in einem Speicher (30) des Lesegeräts (16) zwischengespeichert wird und die Kennung aus der zwischen gespeicherten Benutzer-ID, PIN, dem elektronischen Zertifikat oder der Ortsinformation generiert wird.

7. Zugriffssteuerungssystem nach einem der Ansprüche 1 bis 6, **dadurch gekennzeichnet, dass** nach einer Reihe fehlerfreien Lesens des elektronischen Ausweises (40) und/oder des elektronischen Anwesenheits-Tags (42) einem anschließenden fehlerhaften Lesen anschließend zunächst ein Warnsignal generiert nach Ablauf einer einstellbaren Wartezeit der Rechner (10) gesperrt wird.

8. Zugriffssteuerungssystem nach einem der Ansprüche 1 bis 7, **dadurch gekennzeichnet, dass** der elektronische Ausweis (40) und/oder der elektronische Anwesenheit-Tag (42) vom Lesegerät (16) mit Daten beschreibbar ist.

9. Zugriffssteuerungssystem nach einem der Ansprüche 1 bis 8, **dadurch gekennzeichnet, dass** das Lesegerät (24) über eine USB-Schnittstelle (18) oder über eine WLAN- oder LAN-Schnittstelle (26) updatebar ist.

10. Zugriffssteuerungssystem nach einem der Ansprüche 1 bis 9, **dadurch gekennzeichnet, dass** durch Kombinationen und gemeinsame Auswertungen mehrerer elektronischer Ausweise (40) und/oder Anwesenheits-Tags (42) erweiterte Berechtigungen eines Rechners (10) freigebbar sind.

11. Zugriffssteuerungssystem nach einem der Ansprüche 1 bis 10, **dadurch gekennzeichnet, dass** in einem Speicher (30) des Lesegerätes (16) Treiber und stationäre Software für angeschlossene Rechner (10) oder Terminals gespeichert sind, die bei Anschluss des Lesegerätes (16) an den Rechner (10) oder das Terminal mittels der USB Schnittstelle (18) in den Speicher des Rechners (10) oder Terminals geladen werden.

12. Zugriffssteuerungssystem nach einem der Ansprüche 1 bis 11, **dadurch gekennzeichnet, dass** von einem Rechner (10) über die USB Schnittstelle (18) oder vom Server über die LAN Schnittstelle (20) mittels des Lesegerätes (16) Benutzerrechte, Ortsrechte, Zeitzonen, Zeitstempel, schwarze Listen oder Ereignisse in den Speicher (46, 56) der elektronischen Ausweises (40) und/oder elektronischen Anwesenheits-Tags (42) geschrieben, geändert oder gelöscht werden können.

13. Zugriffssteuerungssystem nach einem der Ansprüche 1 bis 12, **dadurch gekennzeichnet, dass** von einem Rechner (10) über die USB Schnittstelle (18) oder vom Server über die LAN Schnittstelle (20) mittels des Lesegerätes (16) Benutzerrechte, Ortsrechte, Zeitzonen, Zeitstempel, schwarze Listen oder Ereignisse aus dem Speicher (46, 56) der elektronischen Ausweise (40) und/oder elektronischen Anwesenheits-Tags (42) gelesen werden können.

## Claims

1. Access control system for computers (10), consisting of a user input apparatus, such as a keyboard (12) and a mouse (14), and also a reader and an electronic identification (40) which can be read by the reader and has a user ID, wherein, after reading the user ID and inputting a PIN, the computer (10) is unlocked after checking the user ID and the PIN in the event of authorization, **characterized in that** an electronic presence tag (42) worn by the user contains a UHF transceiver (58), an LF receiver (60) and a controller (54), and the reader (16) contains a UHF transceiver (32), an LF transmitter (36) and a controller (28), **in that** the LF transmitter (36) repeatedly sends an item of wake-up information followed by its own location information and a user ID and, when the wake-up information is received by an LF receiver (60) of the electronic presence tag (42), its UHF transceiver (58) is changed from a quiescent state to an operating state and carries out a presence dialogue with the UHF transceiver (32) of the reader (16) by transmitting back the location information and user ID also received by the LF receiver (60), **in that** the presence dialogue is repeated at intervals of time and, when the presence of the user is successfully checked, the computer (10) is unlocked or is kept unlocked until the next check of the presence, wherein the transmission power of the LF transmitter (36), in conjunction with its antenna gain, and the input sensitivity of the LF receiver (60), in conjunction with its antenna gain, are such that the range of the LF transmission path is between 80 cm and 2.5 m, **in that** the electromagnetic field generated by the LF transmitter (36) has an omnidirectional characteristic, and **in that** the antenna arrangement of the LF receiver (60) likewise has an omnidirectional characteristic.

2. Access control system according to Claim 1, **characterized in that** the range can be adjusted in limits by varying the transmission power.

3. Access control system according to Claim 1 or 2, **characterized in that** a user ID and/or an electronic certificate is/are stored on a separate electronic identification (40) or on the electronic presence tag (42) and is/are likewise transmitted from there to the reader (16) by means of the control apparatus (44, 54) at least once in a first presence dialogue, and **in that** an authorization check of the user ID and of the PIN and/or of the electronic certificate is carried out by the computer (10) via a USB interface (18) or by a server or a cloud server via a LAN or WLAN interface (20).

4. Access control system according to one of Claims 1 3, **characterized in that** a PIN and/or an electronic certificate is/are stored on a separate electronic identification (40) or on the electronic presence tag (42) and is/are likewise transmitted from there to the reader (16) at least once after transmitting a user ID once in a first presence dialogue by automatically reading the PIN and/or an electronic certificate from the memory (46, 56) or transmitting the PIN at the request of the user by pressing a button (62) on the presence tag (42) .

5. Access control system according to one of Claims 1 4, **characterized in that** the UHF transceivers (32) have a collision resolution routine by means of their control.

6. Access control system according to one of Claims 1 5, **characterized in that** an encrypted authorization dialogue, as is provided for by the CCID communication protocol in Windows login, takes place between the reader (16) and the computer (10) via native software of the operating system, in which an identifier must be transmitted more frequently than the electronic identification (40) or the electronic presence tag (42) is read, **in that** the user ID, the PIN, the electronic certificate and/or the location information is/are buffered in a memory (30) of the reader (16) by means of the controller (28) of the reader (16) until the next operation of reading the electronic identification (40) and/or the electronic presence tag (42) and the identifier is generated from the buffered user ID, PIN, the electronic certificate or the location information.

7. Access control system according to one of Claims 1 6, **characterized in that**, after a series of operations of reading the electronic identification (40) and/or the electronic presence tag (42) without errors, a warning signal is first of all generated following a subsequent erroneous reading operation and the computer (10) is locked after the expiry of an adjustable waiting time.

8. Access control system according to one of Claims 1 7, **characterized in that** data can be written to the electronic identification (40) and/or the electronic presence tag (42) by the reader (16).

9. Access control system according to one of Claims 1 8, **characterized in that** the reader (24) can be updated via a USB interface (18) or via a WLAN or LAN interface (26) .

10. Access control system according to one of Claims 1 to 9, **characterized in that** extended authorizations of a computer (10) can be released by combining and jointly evaluating a plurality of electronic identifications (40) and/or presence tags (42).

11. Access control system according to one of Claims 1 to 10, **characterized in that** drivers and stationary software for connected computers (10) or terminals are stored in a memory (30) of the reader (16) and are loaded into the memory of the computer (10) or terminal when the reader (16) is connected to the computer (10) or the terminal by means of the USB interface (18).

12. Access control system according to one of Claims 1 to 11, **characterized in that** user rights, location rights, time zones, time stamps, blacklists or events can be written to, changed or deleted in the memory (46, 56) of the electronic identification (40) and/or electronic presence tag (42) by a computer (10) via the USB interface (18) or by the server via the LAN interface (20) by means of the reader (16).

13. Access control system according to one of Claims 1 to 12, **characterized in that** user rights, location rights, time zones, time stamps, blacklists or events can be read from the memory (46, 56) of the electronic identifications (40) and/or electronic presence tags (42) by a computer (10) via the USB interface (18) or by the server via the LAN interface (20) by means of the reader (16) .

## Revendications

1. Système de commande d'accès pour ordinateur (10), composé d'un dispositif de saisie d'utilisateur, tel qu'un clavier (12) et une souris (14), ainsi que d'un lecteur et d'une carte d'identification électronique (40) lisible par le lecteur et comportant un ID d'utilisateur, un déverrouillage de l'ordinateur (10) ayant lieu en cas d'autorisation après la lecture de l'ID d'utilisateur et la saisie d'un code PIN après la vérification de l'ID d'utilisateur et du code PIN, **caractérisé en ce qu'**un badge de présence électronique (42) porté par l'utilisateur contient un émetteur-récepteur UHF (58), un récepteur BF (60) et une commande (54) et le lecteur (16) contient un émetteur-récepteur UHF (32), un émetteur BF (36) et une commande (28), **en ce que** l'émetteur BF (36) émet de manière répétitive une information de réveil suivie d'une information de lieu propre et d'un ID d'utilisateur et, lors de la réception de l'information de réveil par un récepteur BF (60) du badge de présence électronique (42), son émetteur-récepteur UHF (58) est amené d'un état de repos à un état de fonctionnement et il effectue un dialogue de présence avec l'émetteur-récepteur UHF (32) du lecteur (16) avec renvoi de l'information de lieu propre et de l'ID d'utilisateur reçus en plus, **en ce que** le dialogue de présence est répété à des intervalles de temps donnés et, dans le cas d'une vérification réussie de la présence de l'utilisateur, un déverrouillage de l'ordinateur (10) jusqu'à la prochaine vérification de présence est effectué ou maintenu, la puissance d'émission de l'émetteur BF (36) en association avec son gain d'antenne et la sensibilité de réception du récepteur BF (60) en association avec son gain d'antenne étant dimensionnées de telle sorte que la portée de la voie de transmission BF est comprise entre 80 cm et 2,5 m, **en ce que** le champ électromagnétique généré par l'émetteur BF (36) présente une caractéristique omnidirectionnelle et **en ce que** l'arrangement d'antenne du récepteur BF (60) présente lui aussi une caractéristique omnidirectionnelle.

2. Système de commande d'accès selon la revendication 1, **caractérisé en ce que** la portée est réglable dans des limites données en faisant varier la puissance d'émission.

3. Système de commande d'accès selon la revendication 1 ou 2, **caractérisé en ce que** l'ID d'utilisateur et/ou un certificat électronique sont enregistrés sur une carte d'identification électronique (40) séparée ou sur le badge de présence électronique (42) et de là également transmis au lecteur (16) au moyen du dispositif de commande (44, 54) au moins une fois lors d'un premier dialogue de présence et **en ce qu'**une vérification d'autorisation de l'ID d'utilisateur et du code PIN et/ou du certificat électronique est réalisée par l'ordinateur (10) par le biais d'une interface USB (18) ou par un serveur ou un serveur en nuage par le biais d'une interface LAN ou WLAN (20).

4. Système de commande d'accès selon l'une des revendications 1 à 3, **caractérisé en ce qu'**un code PIN et/ou un certificat électronique sont enregistrés sur une carte d'identification électronique (40) séparée ou sur le badge de présence électronique (42) et de là également transmis au lecteur (16) au moins une fois après la transmission d'un ID d'utilisateur une fois lors d'un premier dialogue de présence **en ce que** le code PIN et/ou le certificat électronique sont lus automatiquement depuis la mémoire (46, 56) ou le code PIN est transmis sur sollicitation de l'utilisateur par une pression sur une touche (62) sur le badge de présence électronique (42) .

5. Système de commande d'accès selon l'une des revendications 1 à 4, **caractérisé en ce que** les émetteurs-récepteurs UHF (32) disposent, au moyen de leur commande, d'une routine de résolution des collisions.

6. Système de commande d'accès selon l'une des revendications 1 à 5, **caractérisé en ce qu'**un dialogue d'autorisation crypté se déroule entre le lecteur (16) et l'ordinateur (10) par le biais d'un logiciel propre au système du système d'exploitation, comme le prévoit le protocole de communication CCID lors de l'ouverture d'une session Windows, lors duquel un identificateur doit être transmis plus fréquemment qu'est effectuée la lecture de la carte d'identification électronique (40) ou du badge de présence électronique (42), **en ce que** l'ID d'utilisateur, le code PIN, le certificat électronique et/ou l'information de lieu sont mémorisés temporairement au moyen de la commande (28) du lecteur (16) dans une mémoire (30) du lecteur (16) jusqu'à l'opération de lecture suivante de la carte d'identification électronique (40) ou du badge de présence électronique (42) et l'identificateur est généré à partir de l'ID d'utilisateur, du code PIN, du certificat électronique ou de l'information de lieu mémorisé temporairement.

7. Système de commande d'accès selon l'une des revendications 1 à 6, **caractérisé en ce qu'**après une série de lectures sans erreur de la carte d'identification électronique (40) et/ou du badge de présence électronique (42), une lecture ensuite erronée génère ensuite tout d'abord un signal d'alerte selon lequel l'ordinateur (10) sera bloqué après écoulement d'un temps d'attente réglable.

8. Système de commande d'accès selon l'une des revendications 1 à 7, **caractérisé en ce que** des données peuvent être écrites par le lecteur (16) la carte d'identification électronique (40) et/ou le badge de présence électronique (42).

9. Système de commande d'accès selon l'une des revendications 1 à 8, **caractérisé en ce que** le lecteur (24) peut être mis à jour par le biais d'une interface USB (18) ou par le biais d'une interface WLAN ou LAN (26) .

10. Système de commande d'accès selon l'une des revendications 1 à 9, **caractérisé en ce que** des autorisations étendues d'un ordinateur (10) peuvent être libérées par des combinaisons et des interprétations communes de plusieurs cartes d'identification électroniques (40) et/ou badges de présence électroniques (42) .

11. Système de commande d'accès selon l'une des revendications 1 à 10, **caractérisé en ce que** des pilotes et des logiciels fixes pour des ordinateurs (10) ou des terminaux connectés sont enregistrés dans une mémoire (30) du lecteur (16), lesquels sont chargés dans la mémoire de l'ordinateur (10) ou du terminal au moyen de l'interface USB (18) lors du raccordement du lecteur (16) à l'ordinateur (10) ou au terminal.

12. Système de commande d'accès selon l'une des revendications 1 à 11, **caractérisé en ce que** des droits d'utilisateur, des droits locaux, des zones horaires, des estampilles temporelles, des listes noires ou des événements peuvent être écrits, modifiés ou effacés dans la mémoire (46, 56) de la carte d'identification électronique (40) et/ou du badge de présence électronique (42) par un ordinateur (10) par le biais de l'interface USB (18) ou par le serveur par le biais de l'interface LAN (20) au moyen du lecteur (16).

13. Système de commande d'accès selon l'une des revendications 1 à 12, **caractérisé en ce que** des droits d'utilisateur, des droits locaux, des zones horaires, des estampilles temporelles, des listes noires ou des événements peuvent être lus depuis la mémoire (46, 56) de la carte d'identification électronique (40) et/ou du badge de présence électronique (42) par un ordinateur (10) par le biais de l'interface USB (18) ou par le serveur par le biais de l'interface LAN (20) au moyen du lecteur (16) .
